# EUROPEAN PATENT SPECIFICATION

(11) **EP 2 209 985 B1**
(45) Date of publication and mention of the grant of the patent: **08.04.2015**
(21) Application number: 08807149.3
(22) Date of filing: 24.09.2008
(51) Int. Cl.: F02M 37/00, F02M 21/02, F16K 43/00, F16L 29/02, F02M 37/10

(54) **APPARATUS FOR FEEDING A FUEL, IN PARTICULAR LPG, TO AN INTERNAL COMBUSTION ENGINE**
VORRICHTUNG ZUR ZUFÜHRUNG EINES KRAFTSTOFFS, INSBESONDERE VON LPG, ZU EINEM VERBRENNUNGSMOTOR
DISPOSITIF POUR DÉLIVRER UN CARBURANT, EN PARTICULIER DU GPL, À UN MOTEUR À COMBUSTION INTERNE

(30) Priority: 27.09.2007 IT BO20070659
(43) Date of publication of application: 28.07.2010
(73) Proprietor: X-TECH R&P S.A., 6901 Lugano (CH)
(72) Inventor: BASAGLIA, Rubens, I-44012 Sasso Marconi (Bologna) (IT); WANG, Qiong, Hunan (CN)
(74) Representative: Fanzini, Valeriano
(86) International application number: PCT/IB2008/002489
(87) International publication number: WO 2009/040637

(56) References cited:
- EP-A2- 1 447 556
- WO-A-01/13025
- GB-A- 118 658
- US-A1- 2005 001 194
- US-A1- 2005 116 190
- US-A1- 2006 027 776

## Description

### Technical Field

This invention relates to an apparatus for feeding a fuel, in particular LPG, to an internal combustion engine.

### Background Art

The need to reduce pollution caused by emissions from internal combustion engines and to identify fuels other than petrol and diesel is leading many motor vehicle manufacturers to develop engines and vehicles that are powered by what have come to be known as "alternative" fuels. One of the most well-known alternative fuels for vehicles, appreciated for its low pollutant emissions, ready availability at worldwide level and cost effectiveness is undoubtedly LPG (liquefied petroleum gas) which is normally a mix of propane and butane. Other alternative fuels that are being adopted on an increasingly large scale for vehicles are LNG (liquefied natural gas), methanol and ethanol.

Usage of these fuels in vehicles requires specific tanks/containers: for LPG, it is essential to use a tank/cylinder that keeps the gas under pressure in a liquid state, to prevent its gasification; for LNG, the tank/cylinder used must not only keep the gas under pressure but also keep it thermally insulated (the fuel is at-163°C); for methanol and ethanol, the use of hermetically sealed tanks is essential to prevent leakage of toxic fumes.

As mentioned, LPG is a gas which, in order to be transported and used in vehicles, must be placed in tanks under pressure (normally known as cylinders or bottles) which keep it under pressure in the liquid state. The pressure of the LPG inside the tank/cylinder may, depending on its temperature, vary anywhere from 0.5 to 22 bar. The maximum working pressure of the tanks is set by international standards at 27 bar. Suitable relief devices come into operation when the pressure exceeds this value.

For usage in vehicles, the LPG tanks that have been used for many years now, may be fitted with any of several types of valve or multivalve (which, as known, is a valve that combines different functions in one) for induction and filling purposes and to detect the LPG level inside the tank and keep it within the filling limit of 80% of the total tank capacity in order to guarantee safety standards.

In most cases, these valves, or multivalves, used for fuel filling and induction purposes, have a feed pipe, with a non-return valve, for filling the fuel into the tank/cylinder, and an intake pipe for drawing LPG out of the tank in the liquid state, with a solenoid valve which shuts automatically when the vehicle engine stops. The supply of LPG from the tank/cylinder occurs through the multivalve's intake pipe immersed in the liquid phase, on account of the pressure in the tank/cylinder caused by the boiling of the LPG (the gas phase inside it, under pressure, expels the LPG in the liquid phase through the outlet of the intake pipe). The LPG in the liquid phase is pressurized "naturally" from the gas phase and usually feeds a reducer/vaporizer heated by the engine coolant, thus passing from the liquid phase to the gas phase and from there, through suitable devices (electronically controlled mixers or solenoid valves) supplies the engine.

Only recently have systems for injecting LPG in the liquid phase been developed in order to be able to supply the latest generation engines equipped with sophisticated phased sequential multipoint injection systems and with a view to supplying the latest direct petrol injection engines. These new systems do not necessitate reducer/vaporizers since they do not inject LPG in the gas phase but are fitted with an electric pump located inside the tank/cylinder which pressurizes the LPG to the liquid phase and pumps it through a suitable multivalve and pipe system to a common rail installed in the engine and equipped with specific injectors for LPG in the liquid phase which feed it in sequential and phased manner into the induction pipes of each cylinder.

In simpler terms, the liquid phase LPG injection system is very similar to petrol injection systems but with the major difference and complexity of having to control a fuel located in a totally sealed tank/cylinder subject to continuously variable pressure strongly influenced by ambient temperature or by the heated fuel returning from the injection system, the liquid fuel (i.e. LPG) being extremely volatile under certain conditions and being subject to the risk of boiling/evaporation.

The possibility of injecting LPG in the liquid phase instead of the gas phase has important advantages in terms of engine performance and environmental protection. Fuel under pressure and in the liquid phase can be injected with great precision and speed and not only improves engine efficiency, allowing higher power and torque compared to normal petrol systems because the engine cylinders are filled better by the liquefied gas which is very cool and undergoing rapid expansion when injected, but also greatly reduces engine emissions.

Also, controlling a system that injects LPG in the liquid phase greatly simplifies the electric/electronic interface with the engine's original petrol injection system. Injecting the LPG in the liquid phase means that the electric/electronic interface can be non-intrusive, basically using the original control of the petrol injection system and eliminating the risks of "electronic conflicts" with the many systems that modem vehicles are equipped with, such as, engine control, ABS, automatic gear change, ESP, traction control, air conditioning and, in particular, the on-board diagnostic system. This compares very favourably with current systems where the LPG is injected in the gas phase and which normally involve complex electric/electronic interfacing operations, requiring connections that intrude on the original system, and a specific and separate engine computer control system that must be programmed vehicle by vehicle, with the ever present risk of interference leading to malfunctions, in some cases very serious.

In short, a common rail system that injects LPG in the liquid phase enormously facilitates installation, does not create interface problems with the increasingly complex electronic control systems of modem vehicles, eliminates all conflicts with on-board diagnostics, improves engine performance and emissions, and considerably reduces conversion costs because of the less time required for installation.

The indisputable advantages of injecting LPG in the liquid phase are, however, heavily counterbalanced by the poor reliability of the system due to the high failure rate of the electric injection pumps caused essentially by the contaminants of various kinds present in the LPG. As known, one of the most harmful contaminants for electric LPG injection pumps (where the fuel passes through the rotor and the electric motor contacts and serves as a coolant) is ferrous particulate, often present in significant quantities in LPG. The ferrous particulate is created by the oxide dust and other iron/steel waste particles, often smaller than 10 microns in size, from all the different tanks, pipes and containers the LPG comes into contact with from the time it is produced (refinery or natural gas separators) to the moment it reaches its destination at terminal storage points and fuel stations after being transported by ship, train or truck. Ferrous particulate causes serious damage to electric pump contacts, short circuiting and may even lead to clogging of the injectors. EP 1 447 556 A2 discloses an LPG fuel system with in-tank fuel pump.

The need to replace the electric LPG pump located inside the pressurized tank/cylinder is a serious problem because it involves removing the tank/cylinder from the vehicle, the extremely complex task of emptying it, removing the multivalve and taking the pump out - a normally difficult job - dismantling the pump casing assembly, substituting the faulty component and, in most cases, also the filter. Once this has been done, the procedure must be repeated in reverse order to reassemble all the components, put the tank/cylinder back into the vehicle, fill it up and check it for leaks once it is under pressure again. The entire procedure requires many hours of painstaking work by highly skilled personnel using very expensive equipment that is not readily available and at a decidedly high cost. Moreover, some of the operations involved, such as transferring highly inflammable fuel under pressure, may be dangerous.

### Disclosure of the Invention

This invention therefore provides an apparatus, as described in claim 1 appended hereto, for feeding a fuel, in particular an apparatus for feeding a fuel in the form of LPG (although the solution is also suitable for LNG and other fuels) to an internal combustion engine, the apparatus comprising an element (the element that contains the fuel pump) for delivering the fuel from the tank to the engine and mounted in a valve body, or more precisely in this case, a multivalve, but outside the fuel tank, and comprising also solutions which prevent the fuel from being delivered until the delivery element is inside the multivalve and which shut off fuel outflow when the delivery element is disconnected from the multivalve.

The invention proposes a solution whereby the fuel delivery element can be removed for maintenance or repairs in total safety without having to empty the tank, thus greatly facilitating work and saving a great deal of time.

Preferably, the LPG feed system is built into a single device, with a fuel filtering element interposed between the charging point and the tank and, like the fuel delivery element, is characterized in that it is mounted inside the body of the multivalve but outside the tank and can therefore be removed for cleaning, maintenance and replacement of the filters inside it without having to empty the tank and in total safety, thus greatly facilitating work and saving a lot of time.

According to another advantageous aspect, the internal combustion engine fuel feed system built into a multivalve (multipurpose fuel filling and induction valve) for tanks with fuels under pressure, in particular LPG, is equipped with a feed pump and filtering elements located in independent and separable casings which allow maintenance and substitution without having to depressurize and hence empty the tank. This apparatus is called IMMISS (Integrated Multipurpose Multivalve for Injection System for Sealed tanks).

The main characteristic feature of the feed system is that it is built into a multivalve which allows the electric fuel pump, mounted outside the multivalve and thus outside the tank, to be removed for maintenance or substitution without requiring lengthy and complex procedures to empty the container (tank) which is under pressure and/or contains volatile and/or dangerous liquids, like LPG tanks for automotive use.

A further advantageous aspect of the fuel system of the feeding apparatus is that it incorporates a special filtering system, also inside the multivalve but outside the tank, capable of totally eliminating ferrous waste particulate material, thus preventing the problem of damage to and clogging of fuel pumps and injectors caused by the ferrous particles. This filtering system is also easy to remove for maintenance purposes without having to empty the tank and is fitted with two specific types of filter: a traditional filter which works by mechanical separation, and a high-efficiency magnetic separator fitted with extremely powerful permanent magnets capable of removing all traces of contamination by ferrous waste particulate material very often present in LPG.

The total elimination of ferrous waste particles, extremely harmful to the fuel pumps, significantly improves the reliability of brushed electric pumps but more importantly, allows new generation brushless pumps to be used. These brushless pumps would be difficult to use in the presence of contaminants sensitive to magnetic fields. The use of brushless pumps is a major breakthrough for engine injection systems because it provides a simple and economical means of controlling and very rapidly varying the pressure and flow rate of the fuel supply. These are fundamental characteristics when the fuel concerned, is subject, like LPG, to very high and rapidly changing pressure inside the tank. Another important characteristic of brushless pumps is that they can work without problems even in the presence of highly corrosive fluids such as soda, often found in LPG.

In particular, and without limiting the scope of the present feeding apparatus, this internal combustion engine injection apparatus built into a multivalve for tanks under pressure and/or sealed, for liquid and/or toxic fuels, with fuel pump and filters mounted inside the multivalve but outside the tank, allows dismantling for maintenance and substiution purposes without having to remove the multivalve from the tank, thus eliminating the need for complex and dangerous tank emptying operations.

For simplicity, the following specification describes the injection apparatus according to the invention as applied to LPG tanks, it being understood, however, that its characteristic features can be transferred and are equally applicable to cryogenic tanks for LNG and to sealed tanks containing methanol, ethanol or any other toxic liquid fuel.

### Brief Description of the Drawings

These and other characteristics of the apparatus are clearly described in the claims below and its advantages are more apparent from the detailed description which follows, with reference to the accompanying drawings which illustrate a preferred embodiment of the invention provided merely by way of example without limiting the scope of the inventive concept, and in which:
- Figure 1 is a schematic assembly view of the systems for feeding LPG in the liquid phase and petrol to an internal combustion engine of the type known as a bi-fuel engine, that is to say an engine that can be powered by either of these fuels, using a preferred embodiment of the apparatus for feeding LPG in the liquid phase according to the invention; the same solution, excluding the devices for supplying petrol, can be used for feeding an LPG only, or mono-fuel, internal combustion engine;
- Figure 2 is an exploded view, partly in cross section, of the preferred embodiment of the apparatus according to the invention and shows the body of the multivalve mounted on the LPG tank and housing the casing of the fuel delivery element and the casing of the filtering element;
- Figure 3 is a schematic view, partly in cross section, of the preferred embodiment of the apparatus according to the invention for feeding fuel to an internal combustion engine, and shows the casing of the fuel delivery element and the casing of the filtering element both seated and fixed in their housings inside the multivalve which is in turn mounted on the LPG tank;
- Figure 4 is a section view, of the fuel delivery element of the preferred embodiment of the apparatus according to the invention, seated and fixed in its housing inside the multivalve;
- Figure 5 is a section view, of the filtering element of the preferred embodiment of the apparatus according to the invention, seated and fixed in its housing inside the multivalve;
- Figure 6 is a schematic assembly view of the preferred embodiment of the apparatus according to the invention and shows the casing of the fuel delivery element and the casing of the filtering element while they are being removed from their housings in the multivalve and the detail of the fuel tank outlet shutoff devices when closed;
- Figure 7 is a schematic assembly section view of the preferred embodiment of the apparatus according to the invention and shows the fuel tank safety devices being inserted once the fuel delivery element and/or the filtering element have been removed;
- Figure 8 is a schematic assembly view of the preferred embodiment of the apparatus according to the invention and shows the fuel tank safety devices seated in their housing in the place of the fuel delivery element and of the filtering element.

### Description of the Preferred Embodiments of the Invention

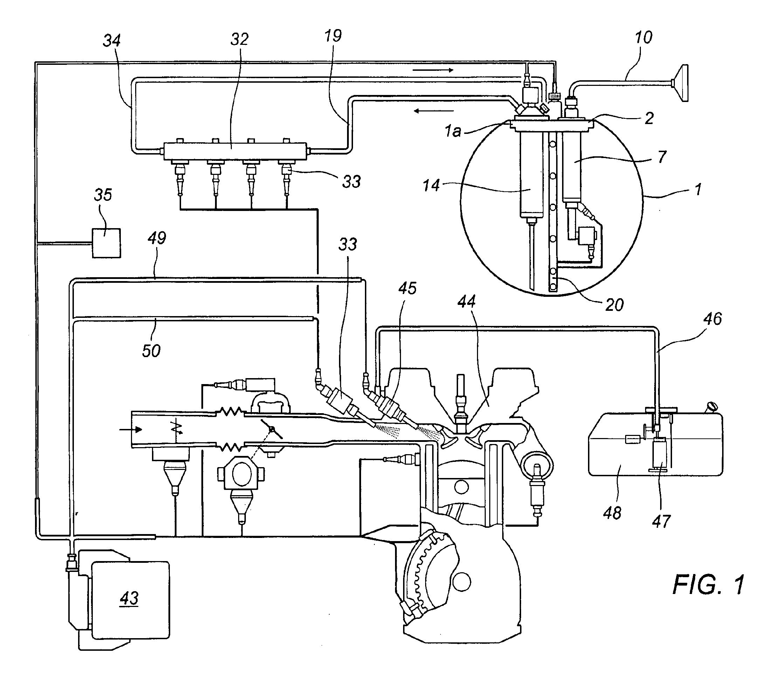

Figure 1 diagrammatically represents a typical bi-fuel system, in this case petrol and LPG in the liquid phase, for an internal combustion engine, and schematically shows a cylinder block of the engine 44, with combustion chamber, piston, valves and spark plug.

The system for feeding LPG in the liquid phase comprises a tank 1, the multivalve 2 with the housing 14 for the delivery element and the delivery pipe 19, through which the LPG is sent under pressure to a common rail 32 having a plurality of injectors 33, suitably connected to the electronic control unit (ECU) 43, for feeding the fuel into a feed pipe leading into the combustion chamber 44. The excess LPG sent to the common rail 32 is recycled back to the LPG tank 1 through the return pipe 34 and returns into the tank 1 through a customary non-return valve going one way only (towards the tank).

As illustrated, the engine is also powered by petrol, which is supplied through a respective injector 45, also located in the respective feed pipe leading to the combustion chamber 44. The injector is fed through the petrol pipe 46 connected to the pump 47 immersed in the petrol, located inside the tank 48.

The ECU 43 processes the data detected by the devices (sensors) and according to the control and diagnostic software provided by the vehicle manufacturer and determines the amount of fuel, whether LPG in the liquid phase or petrol, that is injected into the combustion chamber 44. The fuel is selected using a specific switch 35 through which the ECU 43 activates either the petrol injectors 45 or the LPG injectors 33.

The ECU 43 also processes the signals it receives from the fuel level sensors on the bar 20 and uses these to stop filling when the tank 1 is 80% full and, in the case of a bi-fuel system, to switch automatically to petrol injection when LPG reaches the minimum level.

The numeral 10 denotes the LPG filler pipe running from the filler connector to the tank 1.

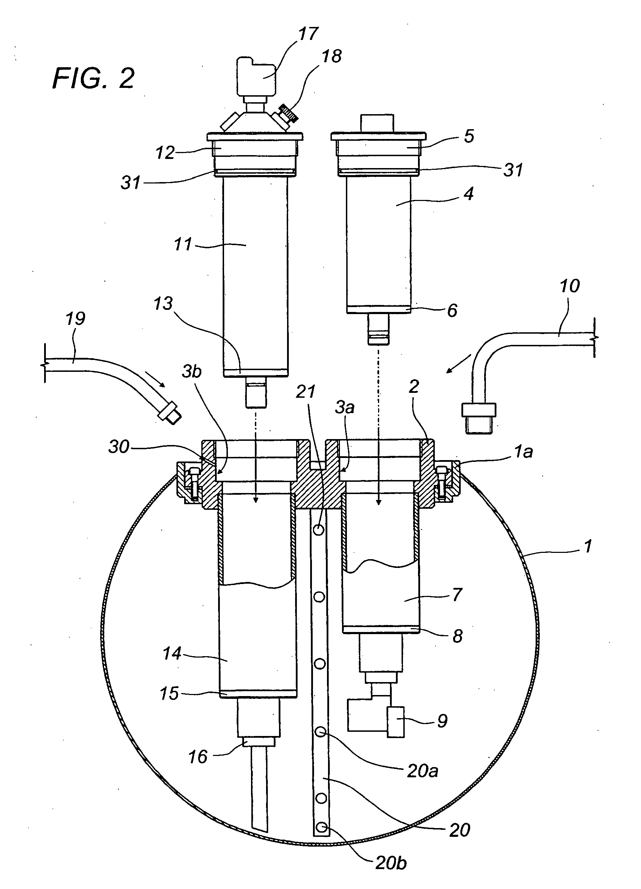

Figure 2 shows a preferred embodiment of the invention, comprising a multivalve mounted on the LPG tank 1 to which it is fixed through a suitable flange 1a welded to, and forming an integral part of, the tank itself, both the delivery element 11 and the filtering element 4 being simply connectable to, and disconnectable from, this flange.

As illustrated in Figure 2, the novel feature of the multivalve is that it has two cylindrical housings 7 and 14, which accommodate the filtering element 4 and the delivery element 11 like two syringes.

Described below is an embodiment of the multivalve 2, of the delivery element 11 and of the filtering element 4, to be considered as only one of the many technical solutions that might embody this invention, without excluding alternative technical solutions that might otherwise implement the invention.

As illustrated in Figure 2, the body of the multivalve 2 has a cylindrical housing 7 for the filtering element 4 and a cylindrical housing 14 for the delivery element 11, both securely attached to the body of the multivalve 2 itself: both the cylindrical housings 7 and 14 have attached to them respective sealing flanges 8 and 15 which, on the inside, comprise means for interfacing with the filtering element 4 and the delivery element 11, respectively. The interfacing means, which will be described in more detail below, together with the functions of the sealing flanges 8 and 15 and of the cylindrical housings 7 and 14, can keep the liquid inside the tank 1 isolated from the outside environment.

The filtering element 4 in turn comprises a cylindrical container, closed at the bottom by a flange 6, whose underside interfaces with the housing 7, and at the top by a sealing head 5 adapted to be inserted and fixed to the body of the multivalve 2, and has a fitting for connecting it to the filler pipe 10.

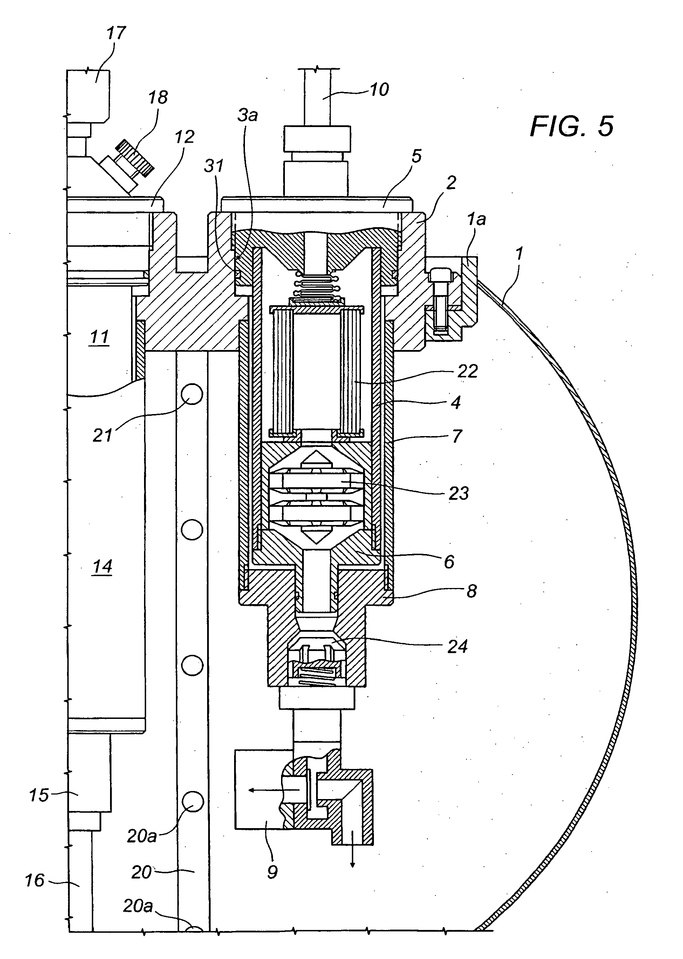

As shown in more detail in Figure 5, the sealing head 5 of the filtering element, when seated in the retaining housing 3a formed in the multivalve 2 and acting in conjunction with the O-ring 31, provides a tight seal with the body of the multivalve itself. The head 5 for sealing to the body of the multivalve 2 can be fixed by means of threading formed partly in the retaining housing 3a or by other means such as a locking ring capable of providing the same safety levels.

The delivery element 11 in turn comprises a cylindrical container, closed at the bottom by a flange 13, whose underside interfaces with the delivery element housing 14, and at the top by an upper sealing head 12 adapted to be fixed to the body of the multivalve 2, and is equipped with a solenoid valve 17 for shutting off LPG delivery, with a manual valve 18 for shutting off LPG delivery and with a fitting for connecting it to the LPG delivery pipe 19.

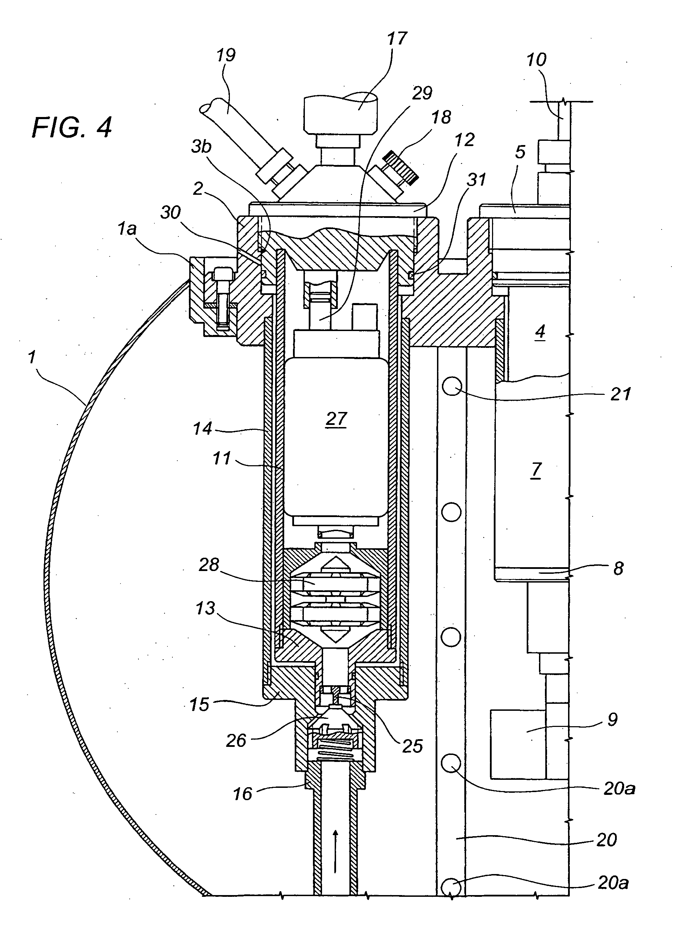

As shown in more detail in Figure 4, the sealing head 12 of the delivery element, when seated in the retaining housing 3b formed in the multivalve 2 and acting in conjunction with the O-ring 31, provides a tight seal with the body of the multivalve itself. The head 12 for sealing to the body of the multivalve 2 can be fixed by means of threading formed partly in the retaining housing 3b or by other means such as a locking ring capable of providing the same safety levels.

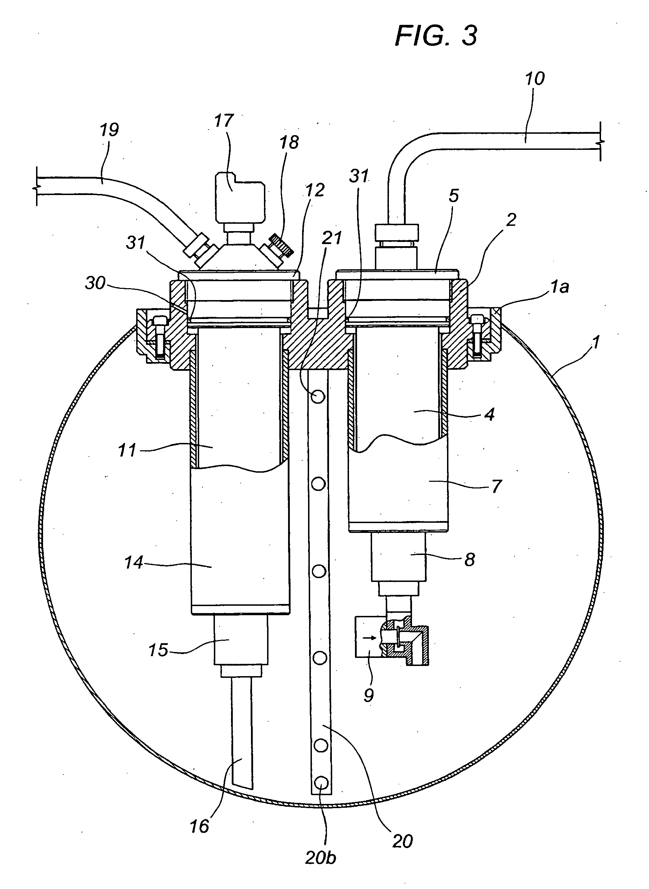

Figure 3 shows the multivalve with the filtering element 4 seated in and fixed to its housing 7, and with the delivery element 11 seated in and fixed to its housing 14. The filtering element 4 is connected to the LPG filler pipe 10 and the delivery element 11 is connected to the LPG delivery 19 that feeds the common rail 32.

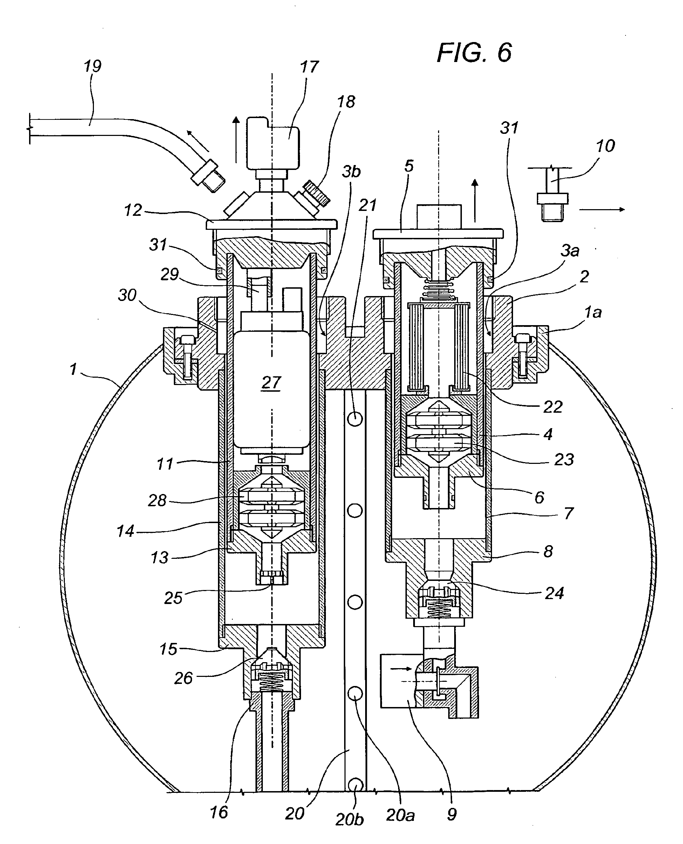

In particularly advantageous manner, means are provided for allowing the fuel to flow from the tank 1 to the delivery element 11 when the delivery element 11 is seated in its housing 14 and which are designed to shut off the fuel flow when the delivery element 11 is detached from its housing 14, as described in more detail below, with reference to Figures 4 and 6.

In particularly advantageous manner, means are provided for allowing the fuel to flow from the filler pipe 10 to the tank 1 through the filtering element 4 during refuelling when the filtering element 4 is seated in its housing 7 and which are designed to shut off the fuel flow from the tank towards the outside when the filtering element 4 is detached from its housing 7, as described in more detail below, with reference to Figures 5 and 6.

Figure 3 shows other aspects of the present apparatus, such as the intake pipe 16 which connects the tank 1 to the delivery element 11 and whose length must be such as to allow it to draw as much fuel as possible out of the tank. The infrared, minimum level sensor 20b must be suitably positioned relative to the inlet of the intake pipe 16, at a higher level than the inlet of the intake pipe 16 so that it will always indicate low fuel level before the level in the tank is too low for the intake pipe to draw fuel. The length of the intake pipe 16 and the position of the level sensor 20b are thus correlated to prevent the pump 27 in the delivery element 11 from running dry and hence to avoid the damage and premature breakage that would be caused by its running without fuel.

Figure 3 also shows another advantageous aspect of the preferred embodiment of the device. This is embodied by the 80% full level sensor 21 and by the solenoid valve 9 for shutting off fuel delivery during refuelling. The ECU 43 enables the solenoid valve 9 to open only when the level sensor 21 indicates that the LPG tank is less than 80% full: during refuelling, as soon as the LPG reaches the level of the sensor 21, indicating that the tank 1 is full to 80% of its capacity, the ECU 43 shuts the solenoid valve 9 to prevent more LPG from being filled into the tank.

Figure 4 shows in more detail how the pump 27 is positioned inside the delivery element 11 and its connection to the head 12, with the fuel outlet pipe 29 inserted into the housing made in the head 12 and the delivery element 11 fixed to the inside of the cylindrical housing 14, forming part of the multivalve body 2.

In particularly advantageous manner, a member 28 for filtering the fuel flowing out of the tank 1 and into the pump 27 is located inside the delivery element 11 before the pump 27.

Advantageously, the filtering member for the fuel flowing out of the tank 1 is located upstream of the fuel pump 27 and downstream of the non-return valve 26.

Advantageously, the filtering member 28 is in the form of an element for retaining ferromagnetic waste, in particular ferrous particulate.

Advantageously, the filtering member 28 is in the form of a magnetic retaining element equipped with high-efficiency permanent magnets.

For this purpose, a magnetic separator 28 of any kind might be used, such as, for example, a filtration system like the one described in the United States patent 6,743,365. For brevity, therefore, the filter 28 is not described in detail.

It should be noticed that the shutter of the non-return valve 26, overcoming the force of the valve spring, opens to allow the fuel to flow from the tank 1 to the pump 27, the shutter 26 being directly acted upon by a push-open element 25 inserted into the connector fitting and forming part of the sealing flange 13 of the delivery element 11. The shutter of the non-return valve 26 is opened only when the delivery element 11 is secured to its housing 14 by tightening the upper sealing head 12 of the delivery element 11 into the retaining housing 3b of the multivalve 2 by screwing it in directly or by fastening a locking ring.

Once the delivery element 11 has been secured in its housing 14, the LPG contained in the tank 1 can flow freely into the intake pipe 16, to the non-return valve 26 opened by the shutter 25, through the magnetic filter separator 28 to reach the pump 27 which pressurizes it and pumps it through the pipe 29 to the LPG delivery pipe 19 and from there to the LPG injector rail 32, the flow being enabled by the ECU 43 which opens the solenoid valve 17. According to this solution, the intrinsic safety of the system is guaranteed because it depends on the operation of the ECU 43, which is connected to all the vehicle's dynamic sensors-including the inertia switch - and which, in the event of an accident, interrupts the supply of fuel to the injectors, to the fuel pump 27 and to the LPG delivery shutoff valve 17, normally closed, thus interrupting the supply of LPG to the delivery pipe 19. Another safety component is the manual valve 18, which can be used to manually shut off fuel supply from the tank 1 to the delivery pipe 19 or to the injector rail 32, overriding the ECU 43, so as to allow maintenance to be carried out on the supply pipes 19 and 34.

Figure 5 shows in more detail how the filtering devices 22 and 23 are positioned inside the cylindrical filtering element 4 and how the latter is fixed to the inside of the cylindrical housing 7, forming part of the multivalve body 2. As shown in the drawing, it should be noticed that a particularly advantageous non-return valve 24 is provided whose shutter, normally closed, is held closed not only by its own spring but also by the pressure inside the tank 1. The solenoid valve 9, also normally closed, is positioned downstream of this non-return valve to allow fuel to flow from the filer pipe 10 to the tank 1 solely and exclusively when the 80% full level sensor 21 gives the signal for the ECU 43 to enable fuel to be filled into the tank. After receiving the enable signal from the level sensor 21, the ECU 43 causes the solenoid valve 9 to open and, as a result, as illustrated in Figure 5, the higher pressure from the filler pump opens the shutter of the non-return valve 24 to allow LPG to flow into the tank 1. Fuel will be filled into the tank until it reaches the 80% full level, detected by the sensor 21 which sends a signal for the ECU 43 to close the solenoid valve 9 to stop fuel from continuing to be filled into the tank 1. When the filtering element 4 has to be removed from the body of the multivalve 2, the small quantity of LPG present in the filler pipe 10 and in the filtering element 4 can be discharged through the filler valve and the head 5 of the filtering element 4 very simply disconnected from the body of the multivalve 2 without any risk of the LPG escaping from the tank since it is sealed off by the shutter of the non-return valve 24 which is kept shut not only by the pushing action of its own spring but also by the pressure inside the tank 1.

As may be noticed, the invention especially advantageously contemplates the provision of a double filtration system for the fuel filled into the tank 1. The first filtration system encountered by the fuel flowing through the filler pipe 10 is a mechanical filter of substantially known type consisting of a cartridge 22 with a glass fibre filtering element that prevents solid particles up to 6-3 microns in size from passing through it. The ingoing fuel filtration means advantageously further comprise a second filtering member 23, located downstream of the first mechanical cartridge filter 22, said second filtering member 23 for the fuel filled into the tank 1 being in the form of a magnetic retaining member designed to separate out metallic particles less than a micron in size and is of substantially the same type as that forming part of the filtration means described above with reference to Figure 4 and is not therefore be described in detail again.

Figure 6 shows how the casing of the delivery element 11 and the casing of the filtering element 4 are of a type that can be quickly, easily and safely removed from their housings 14 and 7. Once the LPG delivery pipe 19 and the LPG filler pipe 10 have been disconnected, it is sufficient to release the delivery element 11 and the filtering element 4, whether they are held in place by screw or locking ring fastening systems, to remove both these devices from the fuel tank 1 for any maintenance or repairs to be easily carried out.

Under these conditions, the non-return valves 26 and 24 are closed and the fuel inside the tank 1 is thus sealed in.

The shutter of the non-return valve 26, once disengaged from the push-open element 25 forming part of the delivery element 11 when the latter is removed from its housing 14, is kept in the closed position by the pressure of its own spring and by the pressure inside the tank; the shutter of the non-return valve 26 is held in the normally closed position not only by the pressure of its own spring but also by the pressure inside the tank.

In practice, when work has to be done on the delivery means 11, it is sufficient to disconnect the head 12 from the delivery pipe 19 and take the delivery element 11 out of its housing 14.

When work has to be done on the filtering element 4, on the other hand, it is sufficient to disconnect the head 5 from the LPG filler pipe 10 and take the filtering element 4 out of its housing 7.

Advantageously, the retaining housing 3b of the delivery element has a pressure relief hole 30 for discharging any LPG from the non-return valve 26 in the housing 14 when the delivery element 11 is removed from the housing 14. The relief hole 30 is designed to enable LPG to be released gradually and safely from the system so that the delivery element 11 can be removed without risk.

The pressure relief hole 30 comes into operation when the head 12 of the delivery element 11 is disengaged from the retaining housing 3b but before the head 12 is completely released from its fastening system, whether screw threading or locking ring, and enables LPG pressure to be slowly and safely relieved as long as the OR seal 31 remains in place in the retaining housing 3b in the head 12.

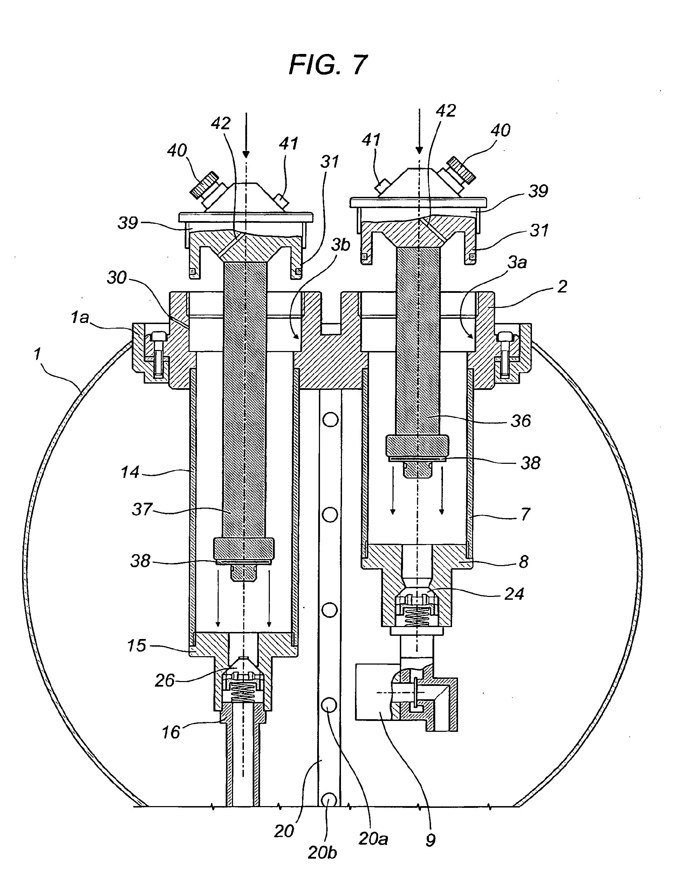

Figure 7 shows the two fuel tank safety devices 36 and 37 which, upon removal of the filtering element 4 or delivery element 11, or both, for maintenance on the apparatus, stop gas from leaking out of the tank 1 through the non-return valves 24 and 26, should fuel be escaping from the tank 1 on account of impurities or debris on the contact surfaces of the valve shutters.

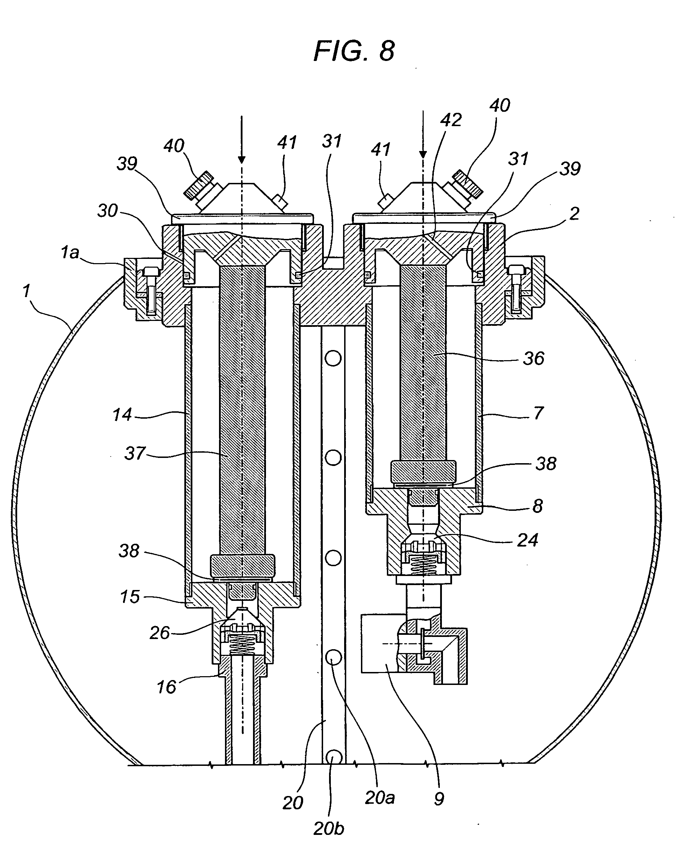

As may be inferred from Figure 8, the safety devices 36 and 37, are rapidly positioned in the place of either the filtering element 4 or of the delivery element 11, when the head 39 is placed in the retaining housing 3a and 3b (see Figure 7), in the body of the multivalve 2 and by positioning the sealing element fitted with closing means or a seal 38 which seals the pipe that communicates with the shutter of the non-return valve 24 in one case, or the pipe that communicates with the shutter of the non-return valve 26 in the other case. The safety devices 36 and 37 are fitted with manual relief valves 40, which must be opened before the body of the multivalve 2 is disengaged in order to discharge any gas that may be in the housings: any gas present, even in small quantities, may be discharged through the relief hole 42 and the outlet 41.

The safety devices 36 and 37 must be used during maintenance or repairs to the apparatus.

## Claims

1. An apparatus feeding LPG or LNG fuel to an internal combustion engine (44), the apparatus comprising a tank (1) for containing the fuel and means (11) for delivering the fuel from the tank to the engine (44) comprising means (27) for propelling the fuel, the delivery means being inserted between the containment walls of the tank (1), **characterized in that** the delivery means (11) are connected to the tank (1) in such a way that they can be engaged and disengaged; and **in that** the delivery means comprises means (25) for allowing the fuel to flow out when the delivery means (11) are engaged in the working position and for shutting off the fuel flow when the delivery means (11) are disengaged and out of the working position.

2. The apparatus according to claim 1, **characterized in that** the delivery means (11) allowing the fuel to flow out of the tank (1) are connected through respective valve means (26), and **in that** it comprises means (25) for opening and shutting off the passage of fuel towards the delivery means (11).

3. The apparatus according to any of the foregoing claims, **characterized in that** the valve means are in the form of a non-return shutter valve (26), and **in that** the means (25) for opening and shutting off the passage of fuel towards the delivery means (11) act directly on the valve means (26).

4. The apparatus according to any of the foregoing claims, **characterized in that** the delivery means (11) comprise means (28), in the form of magnetic retaining means, for filtering the fuel flowing out of the tank (1), and **in that** the means (28) for filtering the fuel flowing out of the tank are located upstream of the delivery pump (27).

5. The apparatus according to any of the foregoing claims, **characterized in that** the delivery means (27) are mounted in a casing (11), **in that** the casing (11) is connected to the tank (1) in such a way that it can be engaged and disengaged, **in that** the casing is inserted between the containment walls of the tank (1), and **in that** the casing is in the form of a hollow cylindrical casing (14) that houses the delivery means (11).

6. The apparatus according to any of the foregoing claims, **characterized in that** the means for opening the passage of fuel towards the pump (27) are defined by one end (25) of the casing (11), **in that** the casing (11) has an end extension sleeve built into the sealing flange (13) and defining the passage opening means (25), and **in that** it comprises, for the casing (11) of the delivery means, mounting means (3b) built into the body of the multivalve (2) acting in conjunction with different fastening elements.

7. The apparatus according to any of the foregoing claims, **characterized in that** it comprises means (14) for housing the delivery means (11), **in that** the means (14) for housing the delivery means (11) extend into the tank (1), **in that** the means (14) for housing the delivery means (11) constitute means for separating the delivery means (11) from the tank (1), and **in that** the means (14) for housing the delivery means (11) valve means (26) for allowing the fuel to flow out of the tank (1).

8. The apparatus according to claim 7, **characterized in that** the means (14) for housing the delivery means (11) are integral with the body of the multivalve (2).

9. The apparatus according to any of the foregoing claims 7 and 8, **characterized in that** the means (14) for housing the delivery means (11) are in the form of a hollow cylindrical casing, **in that** the means (14) for housing the delivery means (11) have an open end into which the delivery means (11) can be inserted, and **in that** the housing means (14) comprise means (30) for discharging fuel that may be present under pressure inside the housing means (14) when the delivery means are disengaged.

10. The apparatus according to any of the foregoing claims, **characterized in that** the valve means for controlling the flow of fuel out of the tank comprise a valve (18) which can be operated manually and which is integral with the delivery means (11).

11. The apparatus according to any of the foregoing claims, **characterized in that** it comprises an element (4) for filtering the ingoing fuel and which is inserted between the containment walls of the tank (1).

12. The apparatus according to claim 11, **characterized in that** the means (4) for filtering the fuel supply comprise first filtration means (22), **in that** the first filtration means (22) are in the form of a mechanical filter, **in that** the means (22) for filtering the ingoing fuel comprise second fuel filtration means (23) and **in that** the second means (23) for filtering the fuel going into the tank (1) are in the form of magnetic retaining means.

13. The apparatus according to any of the foregoing claims 11 and 12, **characterized in that** it comprises means (7) for housing the filtering element (4), **in that** the means (7) for housing the ingoing fuel filtering element (4) extend into the tank (1), and **in that** the means (7) for housing the ingoing fuel filtering element (4) constitute means for separating the ingoing fuel filtering means (4) from the tank (1).

14. The apparatus according to any of the foregoing claims from 11 to 13, **characterized in that** the means (7) for housing the ingoing fuel filtering element (4) mount valve means (24) for opening the passage of fuel into the tank (1).

15. The apparatus according to any of the foregoing claims from 11 to 14, **characterized in that** the means (7) for housing the ingoing fuel filtering element (4) are integral with the means (2) that support the ingoing fuel filtration means (4).

16. The apparatus according to any of the foregoing claims from 11 to 15, **characterized in that** the means (7) for housing the ingoing fuel filtering element (4) are in the form of a hollow cylindrical casing, and **in that** the means (7) for housing the ingoing fuel filtering element (4) have an open end for insertion into the filtering element (4).

17. The apparatus according to any of the foregoing claims, **characterized in that** it comprises means (36, 37) for making the tank (1) safe when the filtering element (4) and/or the delivery element (11) is/are removed from their respective housings (7, 14) each of which comprises means (38, 38) for shutting off the passage of fuel out of the tank, **in that** the safety means (36, 37) are equipped with a head (39) that enables them to be attached to the body of the multivalve (2), **in that** it comprises supporting means (3a, 3b) in which the heads (39) of the safety means (36, 37) are attached to the body of the multivalve (2), **in that** the head (39) of the safety means (36, 37) is equipped with a manual valve (40) which makes it possible to check for the presence of gas under pressure in the housings (7, 14) and to discharge any fuel under pressure that may have leaked into the housing (7, 14), and **in that** the head (39) of the safety means (36, 37) is equipped with a specific relief passage (42) which enables gas to be discharged gradually from the relief outlet (41) when the manual valve (40) is opened.

## Patentansprüche

1. Vorrichtung zur Zuführung von LPG- oder LNG-Kraftstoff zu einem Verbrennungsmotor (44), wobei die Vorrichtung einen Tank (1) zum Enthalten des Kraftstoffs und Mittel (11) zum Zuführen des Kraftstoffs vom Tank zum Motor (44) umfasst, umfassend Mittel (27) zum Treiben des Kraftstoffs, wobei die Zuführungsmittel zwischen den Behälterwänden des Tanks (1) eingesetzt sind, **dadurch gekennzeichnet, dass** die Zuführungsmittel (11) mit dem Tank (1) so verbunden sind, dass verbunden und gelöst werden können, und dadurch, dass die Zuführungsmittel Mittel (25) umfassen, um dem Kraftstoff zu erlauben, auszuströmen, wenn die Zuführungsmittel (11) in der Arbeitsposition verbunden sind, und zum Absperren der Kraftstoffströmung, wenn die Zuführungsmittel (11) gelöst sind und sich nicht in der Arbeitsposition befinden.

2. Vorrichtung nach Anspruch 1, **dadurch gekennzeichnet, dass** die Zuführungsmittel (11), die dem Kraftstoff erlauben, aus dem Tank (1) zu strömen, mittels entsprechender Ventilmittel (26) verbunden sind, und dadurch, dass sie Mittel (25) zum Öffnen und Absperren des Durchgangs des Kraftstoffs zu den Zuführungsmitteln (11) umfassen.

3. Vorrichtung nach einem der vorhergehenden Ansprüche, **dadurch gekennzeichnet, dass** die Ventilmittel die Form eines Rückschlagventils (26) aufweisen und dass die Mittel (25) zum Öffnen und Absperren des Durchgangs des Kraftstoffs zu den Zuführungsmitteln (11) direkt auf die Ventilmittel (26) wirken.

4. Vorrichtung nach einem der vorhergehenden Ansprüche, **dadurch gekennzeichnet, dass** die Zuführungsmittel (11) Mittel (28) in Form von magnetischen Haltemitteln umfassen, um den Kraftstoff, der aus dem Tank (1) strömt, zu filtern, und dass die Mittel (28) zum Filtern des Kraftstoffs, der aus dem Tank strömt, stromaufwärts der Zuführungspumpe (27) angeordnet sind.

5. Vorrichtung nach einem der vorhergehenden Ansprüche, **dadurch gekennzeichnet, dass** die Zuführungsmittel (27) in einem Gehäuse (11) montiert sind, dass das Gehäuse (11) mit dem Tank (1) so verbunden ist, dass es verbunden und gelöst werden kann, dass das Gehäuse zwischen den Behälterwänden des Tanks (1) eingesetzt ist und dass das Gehäuse die Form eines hohlen Zylindergehäuses (14) aufweist, in dem die Zuführungsmittel (11) untergebracht sind.

6. Vorrichtung nach einem der vorhergehenden Ansprüche, **dadurch gekennzeichnet, dass** die Mittel zum Öffnen des Kraftstoffdurchgangs zur Pumpe (27) durch ein Ende (25) des Gehäuses (11) definiert sind, dass das Gehäuse (11) eine Endausdehnungshülse, die in den Dichtungsflansch (13) eingebaut ist und die Mittel zum Öffnen des Durchgangs (25) definiert, aufweist, und dass es für das Gehäuse (11) der Zuführungsmittel, Montagemittel (3b) umfasst, die im Körper des Mehrfachventils (2) eingebaut sind, das in Verbindung mit verschiedenen Befestigungselementen wirkt.

7. Vorrichtung nach einem der vorhergehenden Ansprüche, **dadurch gekennzeichnet, dass** sie Mittel (14) zur Unterbringung der Zuführungsmittel (11) umfasst, dass sich die Mittel (14) zur Unterbringung der Zuführungsmittel (11) in den Tank (1) erstrecken, dass die Mittel (14) zur Unterbringung der Zuführungsmittel (11) Mittel zum Trennen der Zuführungsmittel (11) vom Tank (1) darstellen und dass die Mittel (14) zur Unterbringung der Zuführungsmittel (11) Ventilmittel (26) enthalten, um dem Kraftstoff zu erlauben, aus dem Tank (1) zu strömen.

8. Vorrichtung nach Anspruch 7, **dadurch gekennzeichnet, dass** die Mittel (14) zur Unterbringung der Zuführungsmittel (11) fest mit dem Körper des Mehrfachventils (2) verbunden sind.

9. Vorrichtung nach einem der vorhergehenden Ansprüche 7 und 8, **dadurch gekennzeichnet, dass** die Mittel (14) zur Unterbringung der Zuführungsmittel (11) die Form eines hohlen Zylindergehäuses (14) aufweisen, dass die Mittel (14) zur Unterbringung der Zuführungsmittel (14) ein offenes Ende aufweisen, in das die Zuführungsmittel (11) eingesetzt werden können, und dass die Unterbringungsmittel (14) Mittel (30) zum Ablassen des Kraftstoffs aufweisen, die in den Unterbringungsmitteln (14), wenn die Zuführungsmittel gelöst werden, mit Druck beaufschlagt sein können.

10. Vorrichtung nach einem der vorhergehenden Ansprüche, **dadurch gekennzeichnet, dass** die Ventilmittel zur Regelung der Kraftstoffströmung aus dem Tank ein Ventil (18) umfassen, das von Hand betätigt werden kann und das fest mit den Zuführungsmitteln (11) verbunden ist.

11. Vorrichtung nach einem der vorhergehenden Ansprüche, **dadurch gekennzeichnet, dass** sie ein Element (4) zum Filtern des einströmenden Kraftstoffs umfasst, das zwischen den Behälterwänden des Tanks (1) eingesetzt ist.

12. Vorrichtung nach Anspruch 11, **dadurch gekennzeichnet, dass** die Mittel (4) zum Filtern des Kraftstoffs erste Filtermittel (22) umfassen, dass die ersten Filtermittel (22) die Form eines mechanischen Filters aufweisen, dass die Mittel (22) zum Filtern des einströmenden Kraftstoffs zweite Kraftstofffiltermittel (23) umfassen und dass die zweiten Mittel (23) zum Filtern des in den Tank (1) einströmenden Kraftstoffs die Form von magnetischen Haltemitteln aufweisen.

13. Vorrichtung nach einem der vorhergehenden Ansprüche 11 und 12, **dadurch gekennzeichnet, dass** sie Mittel (7) zur Unterbringung des Filterelements (4) umfasst, dass sich die Mittel (7) zur Unterbringung des Filterelements (4) für den einströmenden Kraftstoff in den Tank (1) erstrecken und dass die Mittel (7) zur Unterbringung des Filterelements (4) für den einströmenden Kraftstoff Mittel zum Trennen der Filtermittel (4) für den einströmenden Kraftstoff vom Tank (1) darstellen.

14. Vorrichtung nach einem der vorhergehenden Ansprüche 11 bis 13, **dadurch gekennzeichnet, dass** die Mittel (7) zur Unterbringung des Filterelements (4) für den einströmenden Kraftstoff Ventilmittel (24) zum Öffnen des Kraftstoffdurchgangs in den Tank (1) besitzen.

15. Vorrichtung nach einem der vorhergehenden Ansprüche 11 bis 14, **dadurch gekennzeichnet, dass** die Mittel (7) zur Unterbringung des Filterelements (4) für den einströmenden Kraftstoff mit den Mitteln (2), die die Filtermittel (4) für den einströmenden Kraftstoff stützen, fest verbunden sind.

16. Vorrichtung nach einem der vorhergehenden Ansprüche 11 bis 15, **dadurch gekennzeichnet, dass** die Mittel (7) zur Unterbringung des Filterelements (4) für den einströmenden Kraftstoff die Form eines hohlen Zylindergehäuses aufweisen und dass die Mittel (7) zur Unterbringung des Filterelements (4) für den einströmenden Kraftstoff ein offenes Ende für den Einsatz in das Filterelement (4) aufweisen.

17. Vorrichtung nach einem der vorhergehenden Ansprüche, **dadurch gekennzeichnet, dass** sie Mittel (36, 37) zur Absicherung des Tanks (1) umfasst, wenn das Filterelement (4) und/oder die Zuführungsmittel (11) aus ihren entsprechenden Gehäusen (7, 14) entfernt werden, wobei jedes davon Mittel (38, 38) zum Absperren des Kraftstoffdurchgangs aus dem Tank umfasst, dass die Absicherungsmittel (36, 37) mit einem Kopf (39) ausgestattet sind, der es ihnen ermöglicht, am Körper des Mehrfachventils (2) angebracht zu werden, dass sie Stützmittel (3a, 3b) umfasst, in denen die Köpfe (39) der Absicherungsmittel (36, 37) am Körper des Multiventils (2) angebracht werden können, dass der Kopf (39) der Absicherungsmittel (36, 37) mit einem manuellen Ventil (40) ausgestattet ist, anhand dessen geprüft werden kann, ob sich mit Druck beaufschlagtes Gas in den Gehäusen (7, 14) befindet und das das Ablassen jedes Kraftstoffs unter Druck, der in das Gehäuse (7, 14) ausgeströmt ist, ermöglicht, und dass der Kopf (39) der Absicherungsmittel (36, 37) mit einer speziellen Ablassleitung (42) ausgestattet ist, anhand derer das Gas schrittweise aus der Ablassöffnung (41) entleert werden kann, wenn das manuelle Ventil (40) geöffnet ist.

## Revendications

1. Dispositif pour délivrer un carburant GPL ou GNL à un moteur à combustion interne (44), le dispositif comprenant un réservoir (1) pour contenir le carburant et des moyens (11) pour faire aller le carburant du réservoir au moteur (44), avec des moyens (27) pour distribuer le carburant, les moyens de distribution se situant entre les parois de contenance du réservoir (1), **caractérisé en ce que** les moyens de distribution (11) sont raccordés au réservoir (1) de sorte à pouvoir se mettre en prise et se libérer; et **en ce que** les moyens de distribution comprennent des moyens (25) pour permettre au carburant de s'écouler quand les moyens de distribution (11) se mettent en prise dans la position de fonctionnement et pour arrêter l'écoulement de carburant quand les moyens de distribution (11) sont libérés et ne sont plus dans la position de fonctionnement.

2. Dispositif selon la revendication 1, **caractérisé en ce que** les moyens de distribution (11) permettant au carburant de s'écouler du réservoir (1) sont raccordés par des moyens à clapet correspondants (26), et **en ce qu'**il comprend des moyens (25) pour ouvrir et pour fermer le passage de carburant vers les moyens de distribution (11).

3. Dispositif selon l'une quelconque des revendications précédentes, **caractérisé en ce que** les moyens à clapet se présentent sous la forme d'un clapet de non-retour (26), et **en ce que** les moyens (25) pour ouvrir et pour fermer le passage de carburant vers les moyens de distribution (11) agissent directement sur les moyens à clapet (26).

4. Dispositif selon l'une quelconque des revendications précédentes, **caractérisé en ce que** les moyens de distribution (11) comprennent des moyens (28), sous la forme de moyens de retenue magnétiques, pour filtrer le carburant s'écoulant du réservoir (1), et **en ce que** les moyens (28) pour filtrer le carburant s'écoulant du réservoir, se situent en amont de la pompe de distribution (27).

5. Dispositif selon l'une quelconque des revendications précédentes, **caractérisé en ce que** les moyens de distribution (27) sont installés dans un boîtier (11), **en ce que** le boîtier (11) est raccordé au réservoir (1) de sorte à se mettre en prise et à se libérer, **en ce que** le boîtier se situe entre les parois de contenance du réservoir (1), et **en ce que** le boîtier se présente sous la forme d'un boîtier cylindrique creux (14) où se logent les moyens de distribution (11).

6. Dispositif selon l'une quelconque des revendications précédentes, **caractérisé en ce que** les moyens pour ouvrir le passage de carburant en direction de la pompe (27), sont définis par une extrémité (25) du boîtier (11), **en ce que** le boîtier (11) présente un manchon d'extension terminal encastré dans la bride étanche (13) et formant les moyens d'ouverture du passage (25), et **en ce qu'**il comprend, pour le boîtier (11) des moyens de distribution, des moyens d'assemblage (3b) encastrés dans le corps de la multivanne (2) agissant conjointement avec différents éléments de fixation.

7. Dispositif selon l'une quelconque des revendications précédentes, **caractérisé en ce qu'**il comprend des moyens (14) pour loger les moyens de distribution (11), **en ce que** les moyens (14) pour loger les moyens de distribution (11) se prolongent dans le réservoir (1), **en ce que** les moyens (14) pour loger les moyens de distribution (11) forment des moyens pour séparer les moyens de distribution (11) du réservoir (1), et **en ce que** les moyens (14) pour loger les moyens de distribution (11) comprennent des moyens à clapet (26) pour permettre au carburant de s'écouler du réservoir (1).

8. Dispositif selon la revendication 7, **caractérisé en ce que** les moyens (14) pour loger les moyens de distribution (11), sont solidaires du corps du bloc multivannes (2).

9. Dispositif selon l'une quelconque des revendications précédentes 7 et 8, **caractérisé en ce que** les moyens (14) pour loger les moyens de distribution (11), se présentent sous la forme d'un boîtier cylindrique creux, **en ce que** les moyens (14) pour loger les moyens de distribution (11) présentent une extrémité ouverte dans laquelle les moyens de distribution (11) peuvent s'insérer, et **en ce que** les moyens de logement (14) comprennent des moyens (30) pour libérer le carburant éventuellement sous pression à l'intérieur des moyens de logement (14), quand les moyens de distribution ne sont pas en prise.

10. Dispositif selon l'une quelconque des revendications précédentes, **caractérisé en ce que** les moyens à clapet pour contrôler l'écoulement de carburant en dehors du réservoir, comprennent un clapet (18) qui peut fonctionner manuellement et qui est solidaire des moyens de distribution (11).

11. Dispositif selon l'une quelconque des revendications précédentes, caractérisé en qu'il comprend un élément (4) pour filtrer le carburant entrant et qui se situe entre les parois de contenance du réservoir (1).

12. Dispositif selon la revendication 11, **caractérisé en ce que** les moyens (4) pour filtrer l'approvisionnement carburant, comprennent des premiers moyens de filtrage (22), **en ce que** les premiers moyens de filtrage (22) se présentent sous la forme d'un filtre mécanique, **en ce que** les moyens (22) pour filtrer le carburant entrant, comprennent des seconds moyens de filtrage du carburant (23), et **en ce que** les seconds moyens (23) pour filtrer le carburant entrant dans le réservoir (1), se présentent sous la forme de moyens de retenue magnétiques.

13. Dispositif selon l'une quelconque des revendications précédentes 11 et 12, **caractérisé en ce qu'**il comprend des moyens (7) pour loger l'élément de filtrage (4), **en ce que** les moyens (7) pour loger l'élément de filtrage du carburant entrant (4) se prolongent dans le réservoir (1), **en ce que** les moyens (7) pour loger l'élément de filtrage du carburant entrant (4) forment des moyens pour séparer les moyens de filtrage du carburant entrant (4) du réservoir (1).

14. Dispositif selon l'une quelconque des revendications précédentes 11 à 13, **caractérisé en ce que** les moyens (7) pour loger l'élément de filtrage du carburant entrant (4), comportent des moyens à clapet (24) pour ouvrir le passage de carburant dans le réservoir (1).

15. Dispositif selon l'une quelconque des revendications précédentes 11 à 14, **caractérisé en ce que** les moyens (7) pour loger l'élément de filtrage du carburant entrant (4), sont solidaires des moyens (2) qui supportent les moyens de filtrage du carburant entrant (4).

16. Dispositif selon l'une quelconque des revendications précédentes 11 à 15, **caractérisé en ce que** les moyens (7) pour loger l'élément de filtrage du carburant entrant (4), se présentent sous la forme d'un boîtier cylindrique creux, et **en ce que** les moyens (7) pour loger l'élément de filtrage du carburant entrant (4), ont une extrémité ouverte pour s'insérer dans l'élément de filtrage (4).

17. Dispositif selon l'une quelconque des revendications précédentes, **caractérisé en ce qu'**il comprend des moyens (36, 37) pour assurer la sûreté du réservoir (1) quand l'élément de filtrage (4) et/ou l'élément de distribution (11) n'est/ne sont pas dans son/leur logement respectif (7, 14), chacun d'eux comprenant des moyens (38, 38) pour fermer l'écoulement de carburant en dehors du réservoir, **en ce que** les moyens de sûreté (36, 37) sont équipés d'une tête (39) qui leur permet de s'attacher au corps de la multivanne (2), **en ce qu'**il comprend des moyens de support (3a, 3b) dans lesquels les têtes (39) des moyens de sûreté (36, 37) s'attachent au corps de la multivanne (2), **en ce que** la tête (39) des moyens de sûreté (36, 37) est équipée d'une vanne manuelle (40) qui permet de vérifier la présence du gaz sous pression dans les logements (7, 14) et de libérer l'éventuel carburant sous pression qui pourrait s'être écoulé dans le logement (7, 14), et **en ce que** la tête (39) des moyens de sûreté (36, 37) est équipée d'un passage de décharge spécifique (42) qui permet au gaz de s'évacuer graduellement par la sortie de décharge (41), quand la vanne manuelle (40) s'ouvre.
